Europäisches Patentamt

European Patent Office

Office européen des brevets

(19)

(11) Numéro de publication: **0 108 008**
**A1**

(12) **DEMANDE DE BREVET EUROPEEN**

(21) Numéro de dépôt: 83402032.3

(22) Date de dépôt: **19.10.83**

(51) Int. Cl.³: **B 60 G 21/06**
**F 16 F 15/04, B 60 G 17/02**

(30) Priorité: **25.10.82 FR 8217789**

(43) Date de publication de la demande:
**09.05.84 Bulletin 84/19**

(84) Etats contractants désignés:
**CH DE GB IT LI NL SE**

(71) Demandeur: **VIBRACHOC**
**216 Les Bureaux de la Colline de Saint Cloud**
**F-92213 Saint Cloud(FR)**

(72) Inventeur: **Vatin, Bertrand**
**17 avenue Concorde**
**F-91400 Orsay(FR)**

(72) Inventeur: **Bernard, Raoul**
**35 Bis Avenue Gabriel Péri**
**F-92260 Fontenay aux Roses(FR)**

(74) Mandataire: **Bernasconi, Jean et al,**
**Cabinet Michel Lemoine 13, Bd. des Batignolles**
**F-75008 Paris(FR)**

(54) Dispositif de suspension hydraulique.

(57) Le dispositif de suspension hydraulique comporte plusieurs vérins souples (2a, 2b, 2c, 2d) interposés entre l'élément mobile (1) à suspendre et le support (3) ainsi que des ressorts (4a, 4b, 4c, 4d) et des moyens d'amortissement. Les chambres des vérins sont reliées à des moyens de transmission hydraulique (5a, 5b, 5c, 5d - 7 - 12) transmettant à chaque vérin la variation des volumes des autres vérins.

Fig.1

EP 0 108 008 A1

1

Dispositif de suspension hydraulique.

La présente invention a trait à un dispositif de suspension hydraulique destiné à produire un effet de suspension élastique avec amortissement.

On connaît déjà un grand nombre de types de suspensions hydrauliques, notamment pour véhicules, utilisant en général des vérins avec pistons coulissant dans un cylindre ou, dans d'autres cas, des vérins souples, c'est-à-dire des enceintes déformables ayant une élasticité de paroi relativement réduite. D'une façon générale, le grand nombre de dispositifs différents qui existe permet une adaptation à un grand nombre de situations pratiques différentes.

Cependant, lorsque l'on désire réaliser une suspension dans laquelle la partie suspendue doit conserver un parallélisme ou un alignement lors de son déplacement, il est nécessaire d'introduire des moyens de guidage, ce qui augmente considérablement le prix de ces suspensions et, d'une façon générale, constitue une importante complication, en particulier si les charges à suspendre présentent une grande surface.

On a déjà proposé, dans la demande de brevet français n° 2.276.623 déposée le 28 juin 1974, un dispositif hydraulique d'alignement pour maintenir un élément mobile parallèle à un plan déterminé et comprenant au moins deux vérins hydrauliques dans lesquels coulissent des pistons, ces vérins étant inclinés par rapport au plan d'un même angle et chaque vérin étant alimenté en liquide incompressible sur au moins l'une des faces de son piston, le liquide occupant dans chaque vérin au moins une chambre de façon telle qu'un déplacement de l'élément mobile parallèlement au plan entraîne dans les chambres des variations de volume correspondantes identiques, chaque chambre étant reliée à un dispositif de transmission hydraulique transmettant à chaque vérin la variation de volume correspondant exactement à la variation de volume de chacun des autres vérins, la somme des volumes restant constante.

Ce document prévoit également de relier lesdits vérins à un cylindre central auxiliaire muni d'un piston présentant plusieurs faces, dont les chambres sont reliées individuellement et respectivement auxdits vérins, ainsi qu'une face reliée à des moyens d'étranglement pour l'amortissement et à la partie hydraulique d'un accumulateur hydro-pneumatique.

Un tel dispositif présente des propriétés remarquables au point de vue du maintien du parallélisme et ceci sans le moindre organe de guidage. Par contre, le fait que pratiquement toute fuite doit être évitée conduit à utiliser, pour conserver l'étanchéité, des joints de pistons entraînant un frottement important difficile à maîtriser et un tel dispositif, dans la pratique, complique la réalisation d'une suspension.

En outre un tel dispositif n'est pas bien adapté à une suspension, car s'il est possible d'obtenir un amortissement des vibrations basse fréquence, il est pratiquement sans effet dans les hautes fréquences.

D'autres dispositifs permettant le maintien d'un alignement grâce à des jeux de vérins hydrauliques sont décrits, par exemple, dans les documents EP-A-0 032 429, FR-A-1 149 748, FR-A-1 593 724, FR-A-1 256 864, FR-E-58 760, BE-A-490 318, ces vérins pouvant, dans certains cas, être du type à paroi souple tel que des soufflets métalliques. Ces dispositifs ne permettent pas un amortissement efficace dans les hautes fréquences, sauf dans le cas du document EP-A-0 032 429 mais alors avec une mauvaise conservation du maintien d'alignement. En outre, tous ces dispositifs sont compliqués à régler et ne peuvent être valablement asservis pour répondre de façon convenable à des sollicitations très diverses. Or le réglagle ou l'asservissement de la raideur et/ou de l'amortissement du dispositif sont des éléments majeurs de la possibilité d'utilisation pratique de ce genre de dispositifs. On voit, par exemple, bien dans le document DE-A-1 430 900 la complication que peut atteindre un dispositif de suspension de véhicule.

La présente invention se propose donc de remédier à ces inconvénients et de fournir un dispositif de suspension hydraulique qui soit de réalisation simple et peu coûteuse en utilisant autant que possible les éléments du commerce, qui permette d'obtenir une suspension élastique amortie extrêmement efficace quelle que soit la fréquence de la sollicitation et facilement réglable ou asservissable en raideur et/ou en amortissement et qui en outre permette de conserver le parallélisme lors du mouvement de la charge suspendue dans des conditions tout à fait convenables en pratique malgré l'absence de tout moyen de guidage.

L'invention a pour objet un dispositif de suspension hydraulique d'un élément ou charge mobile, du type à vérin souple, avec des moyens élastiques et des moyens d'amortissement, comportant au moins deux vérins à paroi souple interposés entre ledit élément mobile et un support, chaque vérin étant alimenté en liquide incompressible occupant la chambre du vérin de façon à conserver, dans une certaine mesure, le parallélisme dudit élément mobile, caractérisé en ce que lesdites chambres desdits vérins sont reliées à des moyens centralisés de transmission hydraulique transmettant à chaque vérin la variation de volume correspondant à la variation de volume des autres vérins, la somme des volumes, c'est-à-dire le volume hydraulique total, restant constante.

Ce dispositif peut être facilement réglé en raideur et/ou en amortissement et, de préférence lesdits moyens centralisés peuvent être reliés à des moyens réglables de la raideur et/ou de l'amortissement de l'ensemble.

On constate ainsi que l'on obtient, malgré l'effet d'élasticité propre aux différents vérins dont les variations de volume ne sont pas strictement linéaires, un excellent effet de suspension dans lequel le parallélisme de l'élément mobile reste conservé dans des proportions extrêmement satisfaisantes.

En outre, on obtient une grande souplesse d'adaptation permettant des réglages faciles pour l'adaptation du dispositif à toutes sortes de cas de figures avec des charges et des fréquences de travail extrêmement variables.

Par vérin souple dans le sens de l'invention, on entend des vérins souples tels que ceux vendus dans le commerce, constitués d'une enceinte déformable, par exemple réalisée en élastomère toilé, ou en métal, par exemple du type soufflet, de tels vérins présentant deux faces extrêmes opposées, de préférence indéformables soit par construction, soit par appui contre les surfaces réceptrices correspondantes alors que la paroi latérale rejoignant lesdites faces est, quant à elle, déformable suivant les variations de volume de la chambre interne formée par le vérin.

Certes, on connaît déjà des vérins à paroi souple utilisés dans la suspension de véhicules (voir par exemple US-A-3 674 282 et US-A-3 980 316), mais ces vérins sont alimentés en air, c'est-à-dire en un fluide essentiellement compressible qui empêche à la fois le maintien constant du parallélisme de la structure supportée et un réglage précis de la raideur.

Les moyens élastiques de la suspension peuvent être avantageusement des accumulateurs hydro-pneumatiques ou des ressorts usuels de suspension, de préférence réglables, conférant à celle-ci la raideur désirée. Le cas échéant, ces moyens peuvent faire partie du vérin ou faire corps avec celui-ci, par exemple et notamment dans le cas de vérins souples métalliques du type à soufflets qui peuvent également faire office de ressorts.

Les moyens d'amortissement peuvent être des moyens quelconques. Il peut s'agir par exemple d'étranglements sur les liaisons hydrauliques entre les vérins ou d'un amortisseur hydro-pneumatique, par exemple du type à membrane ou à vessie.

Dans une forme de réalisation particulièrement simple, les différents pistons ont des sections identiques.

D'autres avantages et caractéristiques de l'invention apparaîtront à la lecture de la description suivante, faite à titre d'exemple non limitatif et se référant au dessin annexé dans lequel :

- la figure 1 représente schématiquement une vue d'une première forme de réalisation selon l'invention,

- la figure 2 représente schématiquement une vue d'une seconde forme de réalisation selon l'invention,

- la figure 3 représente schématiquement une vue d'une troisième forme de réalisation selon l'invention,

- la figure 4 représente schématiquement une vue d'une variante de la forme de réalisation de la figure 3,

- la figure 5 représente une vue schématique d'un moyen de réglage de raideur selon l'invention,

- la figure 6 représente une vue schématique d'un autre moyen de réglage de raideur selon l'invention.

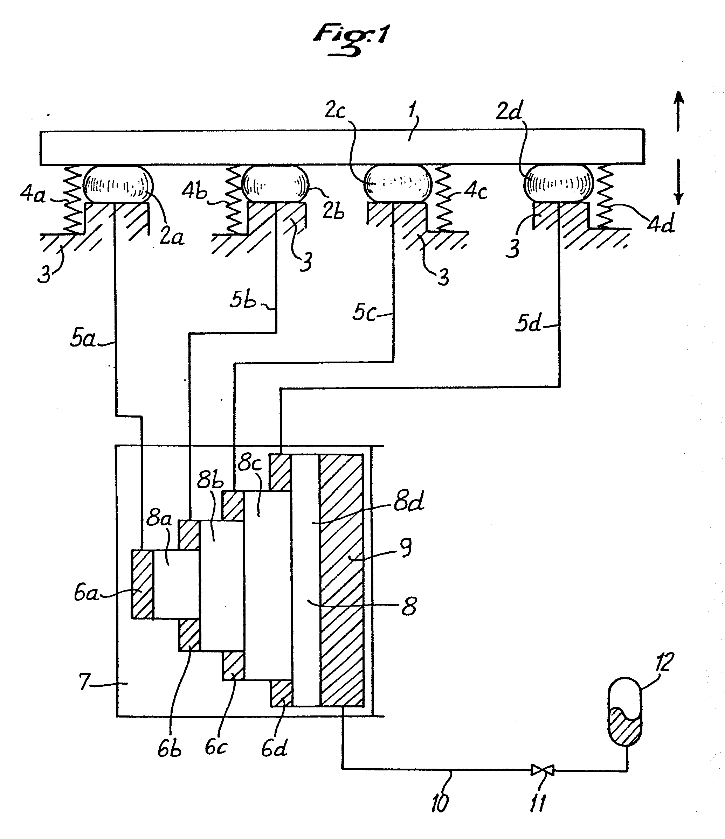

En se référant à la figure 1, on a représenté une charge/élément mobile 1 destinée à se déplacer verticalement, c'est-à-dire dans le sens des flèches. En fait, l'élément mobile 1 est un plateau rectangulaire qui est vu sur la figure 1 dans son épaisseur et les vérins qui vont être décrits et qui ont l'air, sur la figure 1, d'être alignés, doivent être considérés comme disposés chacun au niveau d'un coin de ce plateau rectangulaire, chaque coin étant supporté par un vérin, le dessin ayant été réalisé uniquement à titre de simplification pour éviter une vue en perspective.

En conséquence, sous chacun des quatre coins du plateau rectangulaire se trouve disposé un vérin élastique 2a, 2b, 2c, 2d. Ces vérins sont des vérins réalisés en caoutchouc toilé présentant un aspect d'enceinte circulaire dont la hauteur est variable et varie en croissant lorsque le diamètre médian décroît et inversement. Les vérins sont placés sur un support fixe 3 par rapport auquel l'élément mobile 1 doit se déplacer.

Des ressorts 4a, 4b, 4c, 4d sont associés à chaque vérin et interposés entre l'élément mobile 1 et le support 3 pour définir, pour l'essentiel, la raideur de la suspension. Cependant, on pourrait aussi utiliser un seul ressort ou d'autres ressorts disposés loin des vérins.

Chacun des vérins est relié par une conduite à volume peu ou non variable 5a, 5b, 5c, 5d à chaque fois une chambre 6a, 6b, 6c, 6d pratiquée dans un bloc métallique 7 et dans laquelle est guidé un piston complexe 8 composé d'autant de parties que de chambres, à savoir les parties de piston 8a, 8b, 8c, 8d. Les sections efficaces de chaque partie de piston 8a, 8b, 8c, 8d sont identiques entre elles de sorte que les variations de volume des différentes chambres sont identiques entre elles. L'autre extrémité du piston 8 est en rapport avec une chambre 9 qui, par l'intermédiaire d'une canalisation 10 avec un robinet 11, se trouve en relation avec un accumulateur hydropneumatique 12.

On comprend que dans un tel dispositif, si une variation de position de charge ou un effort tend à solliciter le vérin souple 2a, par exemple pour diminuer son volume et expulser du liquide par la canalisation 5a, il se produit une augmentation de pression dans la chambre 6a et le piston 8 va être repoussé vers la droite, augmentant exactement de la même quantité les volumes des chambres 6b, 6c, 6d, lesquelles à ce moment-là aspirent le liquide contenu dans le vérin 2b, 2c, 2d de sorte que la charge 1 va se déplacer en restant pratiquement parallèle à elle-même. Le même effet se produit si le volume de l'un des vérins souples tend à augmenter.

Le liquide de la chambre 9 avec l'accumulateur hydropneumatique 12 tend à permettre l'absorption des dilatations thermiques du liquide hydraulique des vérins et permet, par exemple par le réglage de l'étranglement 11, d'introduire un élément d'amortissement, ces effets s'effectuant en combinaison avec le fonctionnement de l'accumulateur 12.

Conformément à l'invention, l'élasticité propre aux parois des vérins souples doit être relativement faible et en tout cas suffisamment faible pour ne pas entraîner des risques de déflexions véritablement sensibles du plateau 1, compte tenu des réactions de l'ensemble du dispositif. Bien entendu, si l'on utilise des ressorts plus raides, on améliore également les performances de l'ensemble.

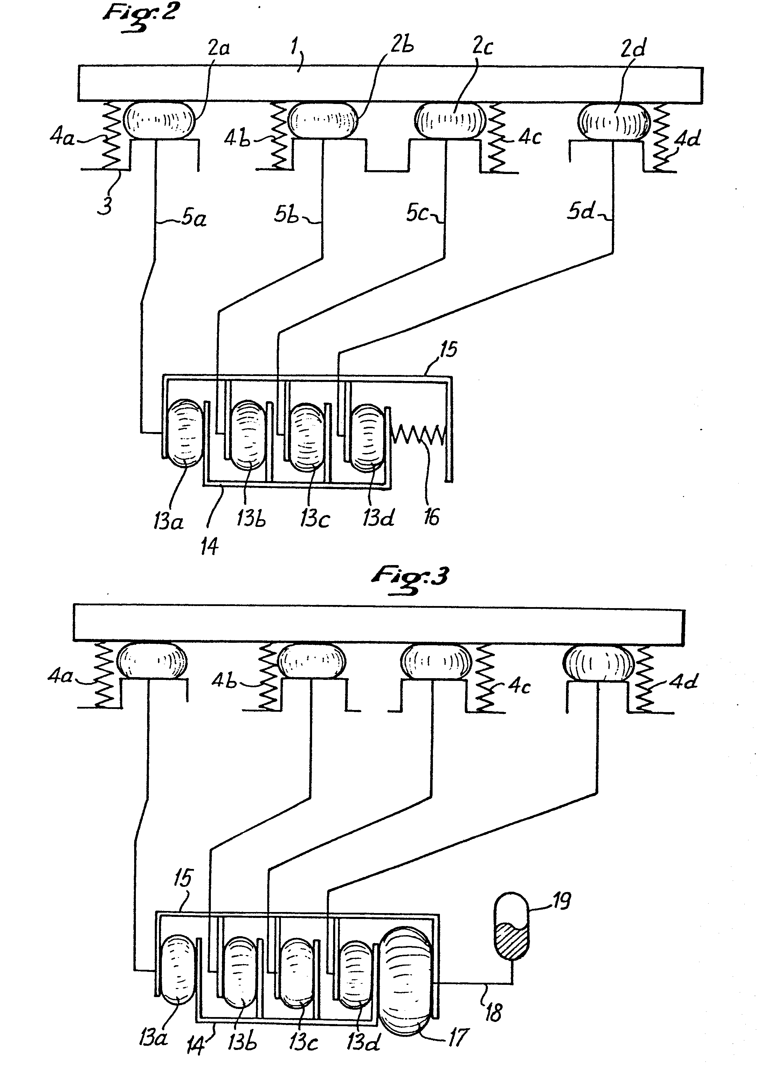

En se référant à la figure 2, on voit une forme de réalisation pratiquement analogue/à celle de la figure 1. Par contre, le dispositif à chambre et piston complexe est remplacé par quatre vérins souples identiques, à savoir les vérins 13a, 13b, 13c, 13d , ces vérins souples recevant les canalisations 5a à 5d respectivement. Ils sont interposés entre une structure fixe 14 qui est appliquée contre l'une de leurs faces et une structure mobile 15 qui transmet à chaque vérin 13a à 13d la déformation du ou des autres vérins 13a à 13d. Un ressort 16 peut avantageusement être interposé entre les deux structures rigides 14 et 15.

On comprend donc que, si par exemple le vérin 2a est sollicité de façon à diminuer son volume et à expulser du liquide par la canalisation 5a, le liquide aboutissant à l'intérieur de la chambre du vérin 13a va augmenter le volume de celle-ci et repousser la structure rigide mobile 15 vers la gauche, en augmentant en conséquence les volumes des vérins souples 13b, 13c, 13d et provoquant une aspiration dans les volumes des vérins 2b, 2c, 2d ce qui rétablit le parallélisme.

Là également, l'expérience montre que l'on obtient de façon remarquable un excellent effet de suspension sans nécessiter le moindre dispositif d'asservissement dynamique, le parallélisme de l'élément mobile 1 dans son déplacement vertical étant assez bien conservé.

Dans cette forme de réalisation, les moyens d'amortissement peuvent être quelconques et, par exemple, simplement constitués par la faible section que l'on peut donner aux conduites 5a, 5b, 5c, 5d ou par étranglement asservi par exemple au régime de la machine à suspendre.

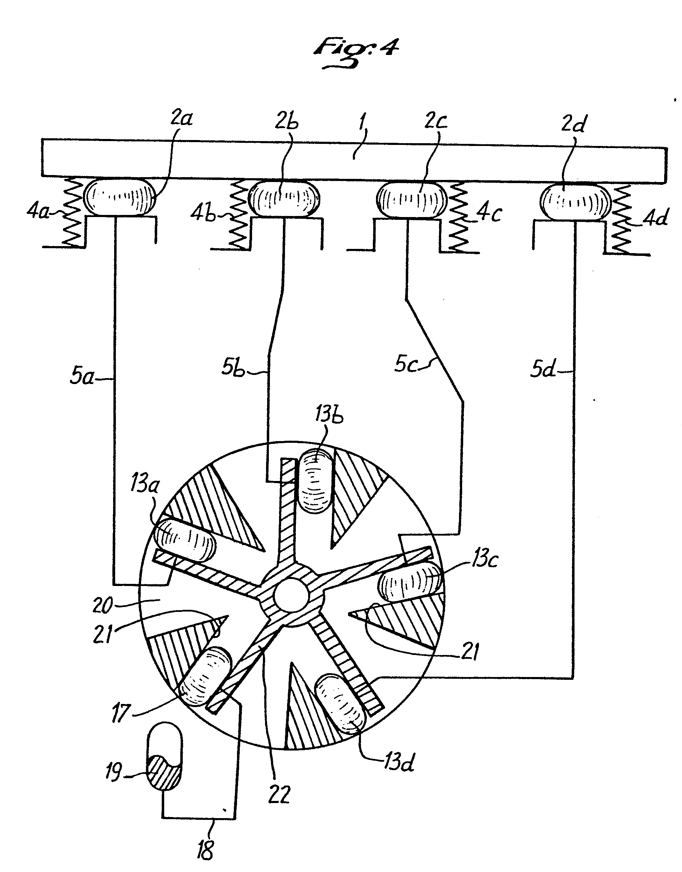

En se référant à la figure 3, on voit une variante de la forme de réalisation de la figure 2 dans laquelle le ressort 16 est supprimé et remplacé par un vérin souple 17 qui, par une canalisation 18, aboutit à un accumulateur hydropneumatique 19. Dans ce cas, le fonctionnement devient sensiblement équivalent à celui de la figure 1. Les ressorts tels que 4a, 4b, 4c, 4d peuvent même être supprimés, l'élasticité étant alors celle de l'accumulateur 19.

En se référant à la figure 4, on voit un dispositif du même type que celui de la figure 3 mais dans lequel l'élément fixe 14 est remplacé par un élément fixe 20 muni de surfaces d'appui 21 dirigées de façon sensiblement radiale et l'élément mobile 15 est remplacé par un élément en forme d'étoile 22 dont les bras sensiblement parallèles aux surfaces 21 respectives viennent se disposer contre les faces corespondantes des vérins 13a à 13d et 17, le fonctionnement étant pour le reste indentique à celui de la réalisation de la figure 4.

Les vérins souples en élastomère toilé utilisés peuvent être remplacés par d'autres types de vérins souples et en particulier par des éléments déformables tels que des éléments en forme de soufflets, notamment des éléments en soufflets, lesquels, ayant une raideur dépendant de l'épaisseur de la paroi en soufflet, peuvent éventuellement compléter les autres moyens élastiques tels que ressorts ou chambres hydro-pneumatiques.

Les suspensions qui ont été ainsi réalisées selon l'invention s'avèrent extrêmement efficaces pour différents usages, notamment pour le support de moteurs ou d'ensembles de machines ainsi que pour la suspension de véhicules. Les caractéristiques dynamiques peuvent être réglées en jouant sur les raideurs des moyens élastiques et sur le degré d'amortissement des moyens amortisseurs.

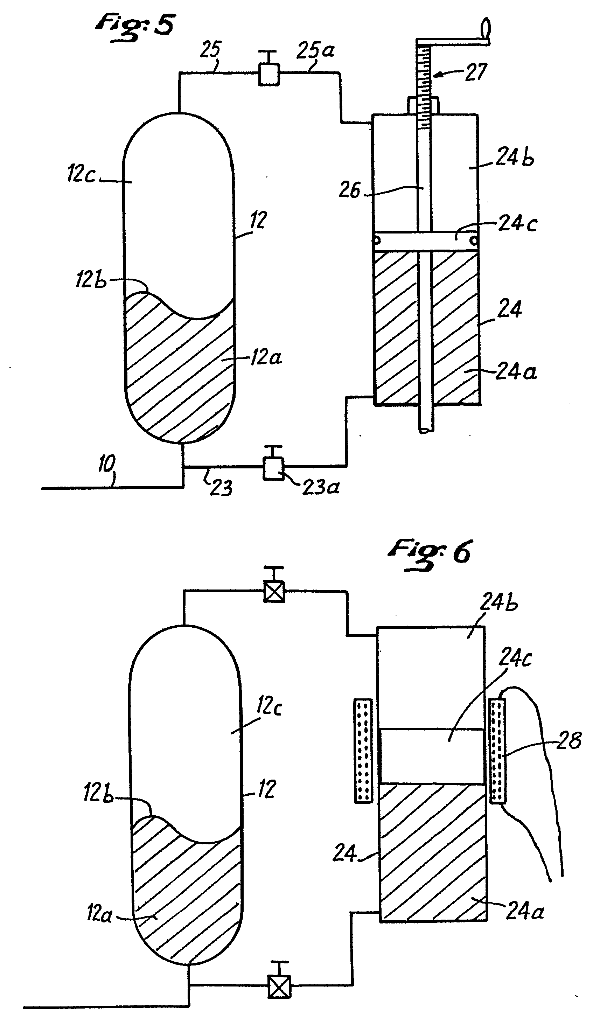

On se réfère à la figure 5 dans laquelle on a représenté un dispositif permettant de faire varier les caractéristiques de l'accumulateur hydro-pneumatique 12 (ou 19) dont on voit la chambre guide 12a, la membrane élastique 12b et la chambre pneumatique sous-jacente 12c. Une dérivation du liquide 23, avec une vanne 23a, aboutit à la partie inférieure d'un cylindre 24 alors qu'une dérivation supérieure 25, avec une vanne 25a, relie la chambre pneumatique 12c à la partie supérieure du cylindre 24. Dans celui-ci peut se déplacer un piston 24c délimitant deux chambres opposées inférieure 24a et supérieure 24b. La position du piston 24c dans le cylindre 24, qui détermine les volumes respectifs de ces chambres, est déterminée par une tige 26, grâce à des moyens de réglage manuel 27.

On comprend que, si l'on veut augmenter la pression dans la chambre pneumatique 12c de l'accumulateur 12, il suffira de faire remonter le piston 24 pour diminuer le volume de la chambre pneumatique 24b, les robinets 25a et 23a étant ouverts pour permettre les adaptations de volume.

En se référant à la figure 6, on voit un dispositif similaire dans lequel la position du piston 24c peut être réglée par exemple par un enroulement électromagnétique 28 réglant électromagnétiquement la position du piston 24c dans le cylindre 24.

Ces moyens de réglage de l'accumulateur 12 ou 19, relié auxdits moyens centralisés de transmission hydraulique tels que 7, 15 et 20 permettent ainsi le réglage de la raideur ou même, dans le cas de la figure 6, l'asservissement de la raideur de l'ensemble du dispositif en asservissant les moyens 24c et 28 à des moyens de commande convenables, par exemple en fonction d'une vitesse ou d'une charge.

L'invention n'est pas limitée aux modes de réalisation décrits ci-dessus et représentés, mais englobe les variantes qui en découlent. En particulier, les ressorts 4a à 4d des figures 1 à 4 pourraient être supprimés et remplacés par l'élasticité de l'accumulateur hydro-pneumatique 12, 19 ou 22 et/ou du ressort 16.

Le système de distribution à vérins souples 13a à 13d des figures 2, 3 et 4 pourrait également être remplacé par un système de distribution à vérins à pistons, attelés entre eux en ligne, en parallèle ou en rotation.

REVENDICATIONS

1. Dispositif de suspension hydraulique d'un élément ou charge mobile (1) du type à vérin souple, avec des moyens élastiques (4a à 4d) et des moyens d'amortissement comportant au moins deux vérins à paroi souple (2a, 2b, 2c, 2d) interposés entre ledit élément mobile (1) et un support (3), chaque vérin étant alimenté en liquide incompressible occupant la chambre du vérin de façon à conserver, dans une certaine mesure, le parallélisme dudit élément mobile, caractérisé en ce que lesdites chambres desdits vérins sont reliées à des moyens centralisés de transmission hydrauliques (7, 8 - 14, 15 - 21, 22) transmettant à chaque vérin la variation de volume correspondant à la variation de volume des autres vérins, la somme des volumes, c'est-à-dire le volume hydraulique total, restant constante.

2. Dispositif selon la revendication 1, caractérisé en ce que lesdits moyens centralisés (7, 8 - 14, 15 - 21, 22) sont reliés à des moyens réglables de la raideur et/ou de l'amortissement.

3. Dispositif selon la revendication 2, caractérisé en ce que lesdits moyens réglables comprennent des ressorts (16).

4. Dispositif selon l'une des revendications 2 et 3, caractérisé en ce que lesdits moyens réglables comprennent des accumulateurs hydro-pneumatiques (12, 19, 22).

5. Dispositif selon l'une quelconque des revendications 1 à 4, caractérisé en ce que lesdits moyens de transmission hydrauliques comprennent des vérins dont les parties mobiles (8a à 8d, 14, 22) sont mécaniquement solidaires entre elles de façon que les variations de volume desdits vérins soient simultanément égales.

6. Dispositif selon la revendication 5, caractérisé en ce que lesdits vérins (13a à 13d) desdits moyens de transmission hydrauliques sont des vérins souples.

7. Dispositif selon l'une des revendications 5 et 6, caractérisé en ce que lesdites parties mobiles solidaires de pistons agissent également sur une chambre de piston (9, 17) reliée à un accumulateur hydro-pneumatique (12, 19).

8. Dispositif selon l'une quelconque des revendications 2 à 7, caractérisé en ce que lesdits moyens d'amortissement réglables comprennent des moyens étrangleurs (11) ou des sections de faibles diamètres de canalisation.

9. Dispositif notamment selon l'une quelconque des revendications 4 à 8, caractérisé en ce qu'un accumulateur hydro-pneumatique (12), possédant un volume hydraulique (12a) et un volume pneumatique (12c), a ses volumes respectivement reliés par l'intermédiaire de vannes (23a, 25a) à des volumes correspondants d'un cylindre (24) dont les moyens de séparation (24c) entre les volumes hydraulique et pneumatique possèdent une position réglable grâce à des moyens de réglage (26, 28).

Fig.1

*Fig.2*

*Fig.3*

0108008

3 / 4

Fig. 4

*Fig. 5*

*Fig. 6*

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | FR-A-2 276 623 (INTERNATIONAL VIBRATION ENGINEERING) * En entier * | 1 | B 60 G 21/06 F 16 F 15/04 B 60 G 17/02 |
| D,X | EP-A-0 032 429 (MURASHIKI-JOB) * En entier * | 1,3,4, 8 | |
| D,X | FR-A-1 149 748 (BRITISH THOMSON-HOUSTON) * En entier * | 1,5,6, 8 | |
| D,A | FR-A-1 593 724 (GAICHE) * En entier * | 1 | |
| D,A | FR-A-1 256 864 (VOLVO) * Figure 1 * | 1 | DOMAINES TECHNIQUES RECHERCHES (Int. Cl. ³) |
| D,A | FR-E- 58 760 (COUTAUD) * Figure * | 1 | B 60 G F 16 F F 15 B |
| D,A | BE-A- 490 318 (CALLEBAUT) * Figures 1-3 * | 1 | |
| D,A | DE-A-1 430 900 (DAIMLER-BENZ) * Page 3, dernier paragraphe - page 4, paragraphe 2; figure unique * | 1,2,5, 7 | |

--- -/-

Le présent rapport de recherche a été établi pour toutes les revendications

| Lieu de la recherche LA HAYE | Date d'achèvement de la recherche 30-01-1984 | Examinateur ESPEEL R.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

0108008

Office européen
des brevets

**RAPPORT DE RECHERCHE EUROPEENNE**

Numéro de la demande

EP 83 40 2032

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-3 674 282 (STOKLASEK) <br><br> * En entier * <br><br> --- | 1-3,5, 6 | |
| X | US-A-3 980 316 (YATES) <br> * Colonne 2, ligne 1 - colonne 3, ligne 63; figure unique * <br><br> --- | 1,2,4 | |
| A | DE-A-2 022 796 (BERGMANN) <br> * Page 2, paragraphes 2,3; figure 3 * <br><br> --- | 1,5 | |
| Y | FR-A-2 038 672 (SIMCA) <br> * Page 10, ligne 23 - page 11, ligne 21; figures 15,16 * <br><br> --- | 9 | |
| Y | US-A-2 887 324 (JACKSON) <br> * Figure unique * <br><br> ----- | 9 | DOMAINES TECHNIQUES RECHERCHES (Int. Cl. ³) |

Le présent rapport de recherche a été établi pour toutes les revendications

| Lieu de la recherche <br> LA HAYE | Date d'achèvement de la recherche <br> 30-01-1984 | Examinateur <br> ESPEEL R.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant